Europäisches Patentamt

European Patent Office

Office européen des brevets

(11) Publication number: **0 178 749**
**B1**

## (12) EUROPEAN PATENT SPECIFICATION

(45) Date of publication of patent specification: **23.11.88**

(21) Application number: **85304261.2**

(22) Date of filing: **14.06.85**

(51) Int. Cl.⁴: **B 65 H 31/30,** B 65 H 31/32

## (54) Stacking and collecting apparatus.

(30) Priority: **15.06.84 GB 8415359**

(43) Date of publication of application:
**23.04.86 Bulletin 86/17**

(45) Publication of the grant of the patent:
**23.11.88 Bulletin 88/47**

(84) Designated Contracting States:
**AT BE CH DE FR GB IT LI LU NL SE**

(56) References cited:
**DE-A-3 043 035**
**DE-B-2 725 267**
**US-A-3 759 402**
**US-A-4 190 241**

(73) Proprietor: **CHAMBON LIMITED**
**Riverside Works Standish Road**
**Hammersmith London W6 9AN (GB)**
㊴ **GB NL SE**

(73) Proprietor: **MACHINES CHAMBON SA**
**6, rue Auguste Rodin La Source Boîte Postale**
**6049**
**F-45018 Orleans-Cedex (FR)**
㊴ **BE CH DE FR IT LI LU AT**

(72) Inventor: **Hodges, William Dominic**
**147 Dorset Road Merton Park**
**London SW19 3EQ (GB)**

(74) Representative: **Pratt, David Martin et al**
**Brookes & Martin High Holborn House 52/54**
**High Holborn**
**London. WC1V 6SE (GB)**

Courier Press, Leamington Spa, England.

## Description

This invention relates to apparatus for, and a method of, stacking and collecting labels, and in particular to automatic stacking and collecting apparatus for individual paper or paper laminate labels produced on a web printing machine.

A known label stacking apparatus includes a plurality of sets of suction discs. Each set of suction discs receives successive labels from a respective stream of labels fed thereto from a web printing machine by a respective pair of suction belts. The suction discs hold the leading edges of the labels by suction through holes in their peripheral edges. The discs rotate the labels through 90°, after which the labels are stripped off by an intercepting horizontal table. The stacks of labels are then removed by hand for a subsequent banding operation.

This known apparatus has a major disadvantage, namely that the stacks must be manually removed for banding, or for putting into a ram punching machine. This disadvantage is exacerbated as the operating speed of the apparatus increases; which, with a modern high-speed web printing machine, can be a serious limitation. Another disadvantage of this known apparatus is that it cannot handle long labels (that is to say labels having a length greater than about 160 millimetres).

The aim of the invention is to provide apparatus for, and a method of, stacking and collecting labels which do not suffer from the disadvantages mentioned above, even when the stacking and collecting is done downstream of a high-speed web printing machine, and the labels concerned are long.

DE—A—30 43 035 (Stiegler) discloses apparatus for stacking and collecting labels, the apparatus comprising feed means for continuously feeding at least one stream of individual labels, a first movable support assembly for supporting a stack of labels corresponding to the stream fed thereto by the feed means, and a second movable support assembly for receiving the stack of labels from the first support assembly, the first support assembly being movable relative to the second support assembly in a first direction to transfer the stack of labels to the second support assembly, whereupon the or each stack of labels is transported off the second support assembly in a second direction. An intermediate support assembly is provided for supporting labels whilst the stack is moved off the second support assembly.

The present invention provides apparatus for stacking and collecting labels, the apparatus comprising feed means for continuously feeding at least one stream of individual labels, a movable support assembly for supporting a respective stack of labels corresponding to the or each stream fed thereto by the feed means, and a further, fixed support assembly for receiving the or each stack of labels from the movable support assembly, the movable support assembly being movable relative to the fixed support assembly firstly to transfer the or each stack of labels to the fixed support assembly, and secondly to push the or each stack of labels off the fixed support assembly, wherein an intermediate support assembly is provided for supporting labels whilst the movable support assembly pushes the or each stack off the fixed support assembly.

The movable support assembly of this apparatus thus acts as a support for the stack(s) of labels as these are delivered by the feed means, and as means for automatically pushing the stack(s) away from the apparatus for banding. Whilst the movable support assembly carries out the pushing step, the intermediate support assembly intercepts the flow of labels, so that the apparatus can operate continuously with an upstream web printing machine.

Advantageously, the apparatus further comprises a transfer carriage positioned adjacent to the fixed support assembly in such a position as to receive the or each stack of labels as it is pushed off the fixed support assembly by the movable support assembly.

The feed means may be constituted by a suction drum including a respective set of suction discs for each stream of labels, each suction disc being provided with at least one series of suction holes in its periphery.

Advantageously, the movable support assembly is constituted by a plurality of parallel, equi-spaced places, said plates being mounted at one end of a common support arm, the other end of the support arm being pivotally mounted in the housing of the apparatus. Preferably, the fixed support assembly is constituted by a plurality of parallel, equi-spaced plates, the plates of the fixed support assembly being so positioned that the plates of the movable support assembly can pass therebetween. Conveniently, the plates of both assemblies have convex upper edges.

In a preferred embodiment, each plate of the fixed support assembly is provided with an upright extending generally at right-angles thereto and at one end thereof. The apparatus may further comprise a respective stripping finger associated with the or each stream of labels, the or each stripping finger being positioned adjacent to the suction drum so as to strip the labels of the associated stream away from the drum. In this case, the or each stripping finger is spaced by substantially 150° around the periphery of the suction drum from the point where the associated stream of labels meets the suction drum; and the arcuate span between the two end suction holes of each series of suction holes in the suction discs is equal to the distance between the point where the labels are stripped away from the suction drum by the associated stripping finger and the uprights of the fixed support assembly. This permits the labels to be placed on the stack(s) rather than being thrown, and so leads to a uniformity or stacking irrespective of the speed of the upstream machine. Moreover, because the suction holes extend round an arc of each of the suction discs, the labels are held over a considerable distance as they "roll" over the suction discs, so that the apparatus can also handle long labels.

Advantageously, the common support arm of the movable support assembly is reciprocable in the direction of its longitudinal axis by means of a ram. This ram can be used to move the movable support assembly relative to the fixed support assembly so as to transfer the stack(s) of labels to the fixed support assembly. Preferably, said ram is an air-operated, pressure-intensified oil dosing ram which is extended by air operation and retracted incrementally by doses of oil.

The movable support assembly may be rotatable about said other end of the support arm by a pneumatic ram assembly. This ram assembly can be used to push the stack(s) of labels off the fixed support assembly. Preferably, the pneumatic ram assembly is constituted by a long-stroke pneumatic ram and a short-stroke pneumatic ram.

The intermediate support assembly may be constituted by a par and a respective counting finger aligned with the or each stream of labels, the arrangement being such that the or each counting finger is interposed between the feed means and the associated previously-positioned stack of labels when a predetermined number of labels have been fed to said stack. Advantageously, the or each counting finger is provided with a suction hole in the upper surface for retaining the first label fed thereto after the predetermined number of labels has been fed to the associated stack.

The apparatus may further comprise an electronic batch counter for counting the number of labels fed to the or each stack. Advantageously, the bar is rotatable about its longitudinal axis by a pneumatic ram, said pneumatic ram being controlled by a signal from the electronic batch counter. Preferably, the bar is reciprocable towards, and away from, the feed means by a further pneumatic ram.

The invention also provides a method of stacking and collecting labels, the method comprising the steps of feeding at least one stream of individual labels to a movable support assembly, the feed means being such as to deposit successive labels of the or each stream in a respective stack on the movable support assembly, moving the movable support assembly in a first direction relative to a fixed support assembly so that the or each stack of labels is transferred to the fixed support assembly, and moving the movable support assembly in a second direction relative to the fixed support assembly to push the or each stack of labels off the fixed support assembly.

The movable support assembly may be moved linearly with respect to the fixed support assembly in said first direction, and may be moved arcuately with respect to the fixed support assembly in said second direction.

Advantageously, the method further comprises the step of positioning an intermediate support assembly in the path of the labels as they are moved towards the movable support assembly when a predetermined number of labels have been delivered to the or each stack, whereby subsequently fed labels of the or each stream form a respective new stack on the intermediate support assembly. In this case, the method may further comprise the step of withdrawing the intermediate support assembly after the movable support assembly has pushed the or each stack of labels off the fixed support assembly, whereby the or each new stack carried by the intermediate support assembly is transferred to the movable support assembly.

Apparatus for stacking and collecting labels and constructed in accordance with the invention will now be described in detail, by way of example, with reference to the accompanying drawings, in which:—

Fig. 1 is a schematic side elevation of the apparatus;

Fig. 2 is an end elevation of the apparatus; and

Figs. 3a to 3g are schematic side elevations showing successive operating positions of the apparatus.

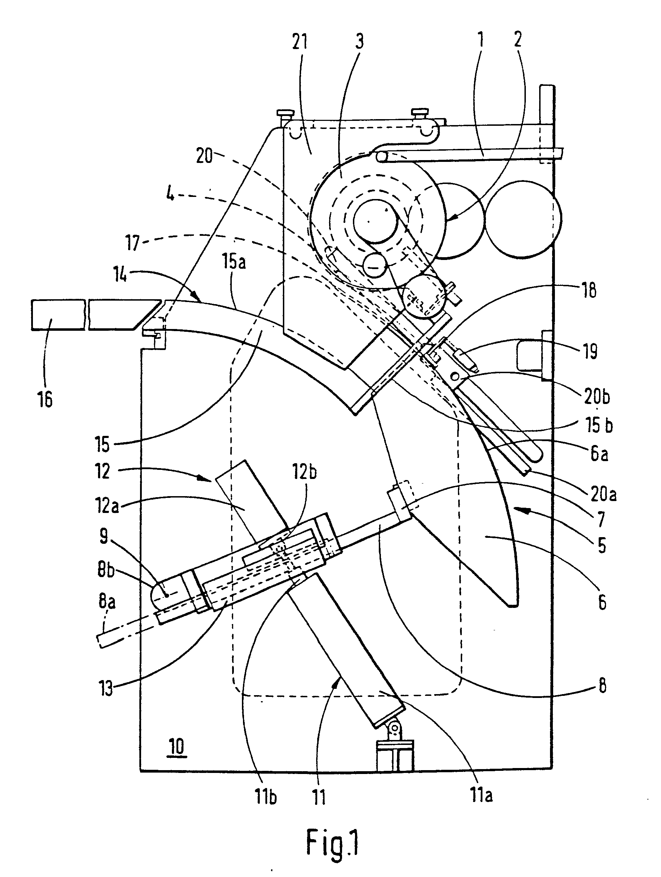

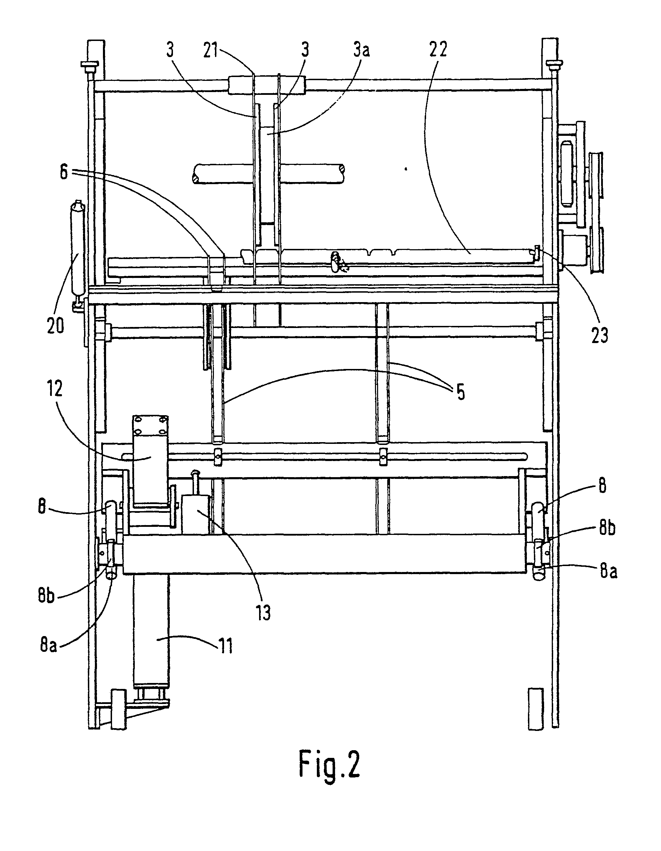

Referring to the drawings, Figs. 1 and 2 show apparatus for collecting and stacking labels, the apparatus being positioned downstream of machinery (not shown) used to print the labels and to cut the labels to size. The apparatus comprises a plurality of suction belts 1 (only one of which can be seen in Fig. 1). Each suction belt 1 carries a respective stream of printed and cut labels from the upstream machinery to a suction drum 2. The suction drum 2 has a plurality of sets of hollow suction discs 3 (only one of which can be seen in Fig. 1). Each set of suction discs 3 is aligned with a respective suction belt 1 so as to pick up the labels of the associated stream as they leave the suction belt. Typically, there are two suction discs 3 in each set, the discs of each set being associated with a respective manifold 3a (see Fig. 2). Each suction disc 3 is formed with a plurality (say three) of series of suction holes (not shown) in its circumferential edge. The suction holes of each of the suction discs 3 extend over an arc of 160 millimetres length, so that the labels are held to the suction discs over a considerable distance as they "roll" round the suction discs. This enables the apparatus to handle long labels (that is to say labels longer than about 160 millimetres). The hollow interiors of the manifolds 3a of the suction discs 3 are connected to a vacuum pump (not shown), as are the suction belts 1.

The suction discs 3 are arranged to carry the labels through 150°, and then to deposit them in stacks as described below. Accordingly, stripping fingers 4 (only one of which can be seen in Fig. 1) are positioned to strip the leading edges of the labels once the labels have been carried through 150°. The stripping fingers 4 are arranged between adjacent support discs 3 of each set. As the labels are stripped away from their sets of suction discs 3, they are precisely deposited on a movable support assembly 5. This assembly 5 is constituted by a plurality of equi-spaced parallel plates 6 (only one of which can be seen in Fig. 1), each of which has a convex upper support edge 6a. The plates 6 are attached to a support bar 7, which in turn is mounted on one end of a support arm 8. The other end of the support arm 8 is pivotally mounted, at 9, to the frame 10 of the apparatus. The movable support assembly 5 can be rotated about the pivot 9 by a compound pneumatic ram system constituted by a long-stroke ram 11 and a short-stroke ram 12. The cylinders 11a and 12a of the rams 11 and 12 are pivotally mounted on the frame 10, and their piston rods 11b and 12b are pivotally attached to the support arm 8. The support arm 8 is attached to a pair of tied racks 8a (only one of which is shown), and is reciprocable by a ram 13 to raise and lower the movable support assembly 5. The ram 13 is an air-on-oil ram, lowering of the support arm 7 being effected by an air-operated, pressure-intensified oil dosing arrangement. The tied racks 8a cooperate with pinions 8b to ensure that the support arm 8 moves in parallelism.

The movable support assembly 5 cooperates with a fixed support assembly 14. This assembly 14 is constituted by a plurality of equi-spaced parallel plates 15 (only one of which can be seen in Fig. 1), each of which has a convex upper support edge 15a and an upright 15b. The uprights 15b define a back stop against which the stacks of labels can rest. The convex support edges 15a and the convex support edges 6a have different radii of curvature. The plates 15 are positioned so that the plates 6 of the movable support assembly 5 can pass therebetween. This enables stacks of labels deposited on the movable support assembly 5 to be transferred to the fixed support assembly 14 (as is described below). After the stacks of labels have been transferred to the fixed support assembly 14, they are pushed by the movable support assembly 5 on to a transfer carriage 16, as is described in detail below.

In order that a predetermined number of labels may be positioned in each of the stacks, count fingers 17 (only one of which can be seen in Fig. 1) are provided. A respective count finger 17 is provided for each stack, and the count fingers are all mounted on a common equipment bar 18. The bar 18 is rotatable about its central longitudinal axis by means of a pneumatic ram 19. The bar 18 is also movable into, and out of, an operating position by a pneumatic ram 20. The ram 20 is effective to move the bar 18 towards, and away from, the suction drum 2. During this reciprocal movement, the bar 18 is guided between rails (not shown), and is connected to the ram 20 by a rack 20a and a pinion 20b. The operation of the count fingers 17 is controlled by an electronic batch counter (not shown).

The apparatus also includes a plurality of stack separator plates 21 (only one of which can be seen in Fig. 1). These plates 21 extend between the stacks of labels, and are arranged to oscillate transversely, thereby ensuring that the labels in all the stacks have their lateral edges accurately aligned. The plates 21 are mounted on a bar 22 which is movable backwards and forwards by an oscillating mechanism 23.

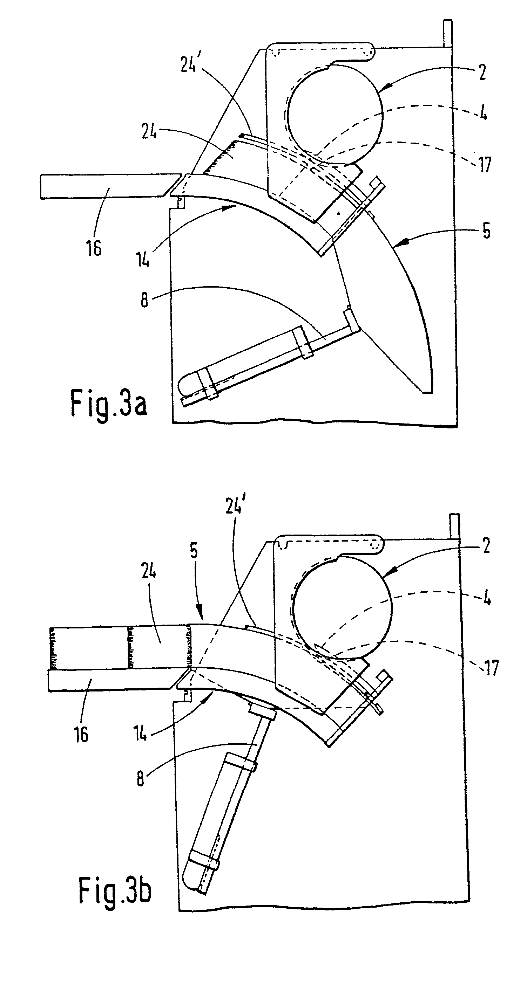

The operation of the stacking apparatus will now be described with reference to Figs. 3a to 3g. Fig. 3a shows the apparatus in the position in which stacks 24 (only one of which can be seen) have been transferred from the movable support assembly 5 to the fixed support assembly 14, the movable support assembly is in an intermediate position, and the count fingers 17 have been moved forward to intercept the flow of labels and start new stacks 24'. This movement of the count fingers 17 is initiated by a control signal from the electronic batch counter, which actuates the ram 19 to pivot the bar 18 so as to move the count fingers into the position shown in Fig. 3a. The electronic batch counter is arranged to emit the control signal after it has counted a predetermined number of labels (say 1000).

The movable support assembly 5 is then actuated to push the stacks 24 along the plates 15 of the fixed support assembly 14, and on to the transfer carriage 16 (see Fig. 3b). This is accomplished by rotating the assembly 5 about its pivot 9 by the long-stroke ram 11. The short-stroke ram 12, which at this stage is fully extended, takes no part in this movement. At this stage, the labels delivered by the suction drum 2 pile up on the count fingers 17, forming the new stacks 24'. The stacks 24 can then be moved laterally to one or more banding modules, after which they are removed for transportation.

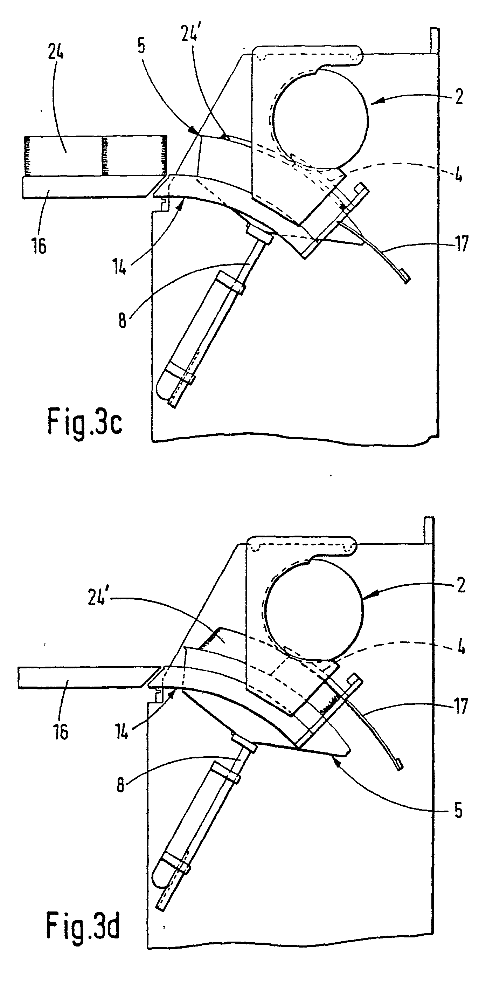

The movable support assembly 5 is then retracted a short distance to provide an operating clearance between the plates 6 and the transfer carriage 16 (see Fig. 3c). At the same time, the count fingers 17 are retracted. The part-way retraction of the movable support assembly 5 is effected by the retraction of the short-stroke ram 12; and the count fingers 17 are retracted (together with the bar 18) by retracting the ram 20.

As the suction drum 2 feeds more and more labels on to the stacks 24', the movable support assembly 5 is lowered (see Fig. 3d). At the same time, the count fingers 17 are raised. The assembly 5 is lowered by the ram 13, air-operated, pressure-intensified oil doses being fed to the ram 13 in a controlled manner in dependence upon signals received from the electronic batch counter. In this way, the movable support assembly 5 is lowered at a controlled rate which is proportional to the rate of stack growth. The count fingers 17 are raised by rotating the bar 18 using the ram 19.

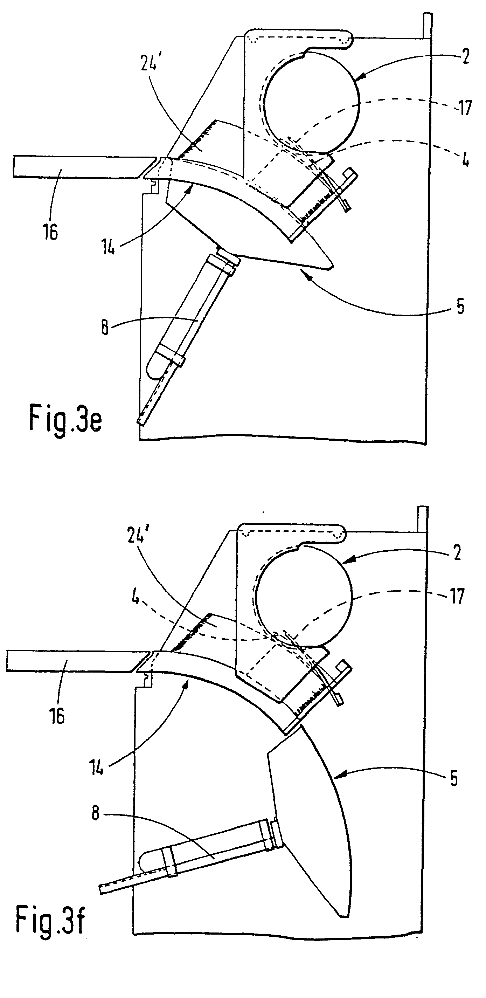

The count fingers 17 are then moved back towards the suction drum 2, whilst the movable support assembly 5 continues to be lowered until the convex upper edges 6a of its plates 6 lie below the convex upper edges 15a of the plates 15 of the fixed support assembly 14 (see Fig. 3e). The stacks 24' then rest on the fixed support assembly 14. The count fingers 17 are moved back towards the suction drum 2 by the ram 20.

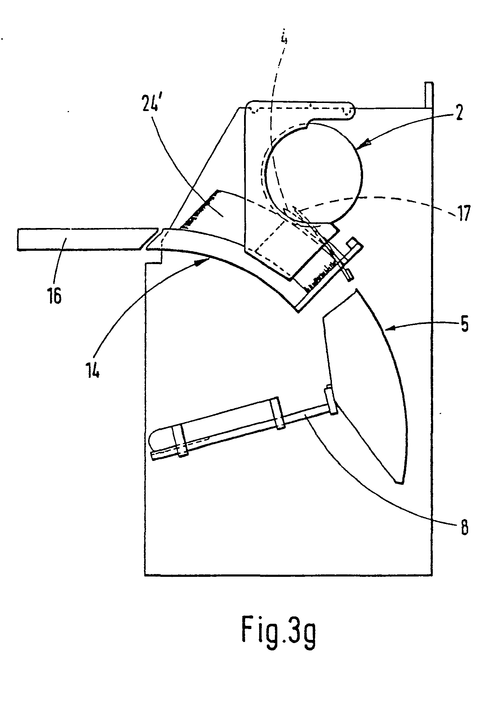

The movable support assembly 5 is then rotated fully down by retracting the long-stroke ram 11 (see Fig. 3f). The assembly 5 is then raised relative to its support arm 8 by fully extending the ram 13 (see Fig. 3g). This brings the movable support assembly 5 into alignment with the stacks 24'. This step is immediately followed by a partial rotation of the movable support assembly 5, about the pivot 9, to bring the apparatus into the start position. This is accomplished by extending the short-stroke ram 12. The apparatus is now in position to repeat the cycle upon receipt of the control signal from the batch counter.

It should be noted that the apparatus is such that each label is held on the suction drum 2 by suction through series of holes in the associated sets of suction discs 3, so that it is rotated through 150°, and deposited precisely to the back of a pocket formed by the previously-delivered label and the back stop defined by the uprights 15b of the plates 15 of the fixed support assembly 14. The arcuate span of the first and last holes in each series of holes is arranged to be equal to the distance from the point where a label is stripped from the suction discs 3 (by the stripping fingers 4) to the back stop. Suction is applied to each hole of a series consecutively at the transfer point at the top of the associated suction disc 3 (that is to say at the point where a label is transferred to the suction drum 2 from the upstream suction belts 1), and cut off 150° later at the stripping point. This is accomplished by a stationary annular valve (not shown). As a result of this arrangement, the labels are laid on their stacks, rather than being thrown against the back stop.

It will be apparent that the apparatus described above could be modified in a number of ways. For example, depending upon the width of the labels, each stream of labels could be handled by two or more suction belts (and accordingly by two or more sets of suction discs).

Although the apparatus described above is used to stack and collect labels (particularly paper labels or paper laminate labels), it will be appreciated that it could also be used to stack and collect other similar flat flexible articles, and the term "labels" should be construed accordingly throughout this specification.

## Claims

1. Apparatus for stacking and collecting labels, the apparatus comprising feed means (1, 2, 3) for continuously feeding at least one stream of individual labels, a movable support assembly (5) for supporting a respective stack of labels (24) corresponding to the or each stream fed thereto by the feed means (1, 2, 3), and a further support assembly (14) for receiving the or each stack of labels (24) from the movable support assembly (5), the movable support assembly (5) being movable relative to the further support assembly (14) firstly to transfer the or each stack of labels to the further support assembly (14), and secondly to move the or each stack of labels (24) off the further support assembly (14), wherein an intermediate support assembly (17, 18) is provided for supporting labels whilst the or each stack is moved off the further support assembly (14), characterised in that the further support assembly (14) is fixed and in that the movable support assembly (5) is capable of pushing the or each stack (24) off said fixed further support assembly (14).

2. Apparatus as claimed in claim 1, further comprising a transfer carriage (16) positioned adjacent to the fixed support assembly (14) in such a position as to receive the or each stack of labels (24) as it is pushed off the fixed support assembly (14) by the movable support assembly (5).

3. Apparatus as claimed in claim 1 or claim 2, wherein the feed means is constituted by a suction drum (2).

4. Apparatus as claimed in claim 3, wherein the suction drum (2) includes a respective set of suction discs (3) for each stream of labels, each suction disc (3) being provided with at least one series of suction holes in its periphery.

5. Apparatus as claimed in any one of claims 1 to 4, wherein the movable support assembly (5) is constituted by a plurality of parallel, equi-spaced plates (6), said plates (6) being mounted at one end of a common support arm (8), the other end of the support arm (8) being pivotally mounted in the housing (10) of the apparatus.

6. Apparatus as claimed in claim 5, wherein the plates (6) of the movable support assembly (5) have convex upper edges (6a).

7. Apparatus as claimed in claim 5 or claim 6, wherein the fixed support assembly (14) is constituted by a plurality of parallel, equi-spaced plates (15), the plates (15) of the fixed support assembly (14) being so positioned that the plates (6) of the movable support assembly (5) can pass therebetween.

8. Apparatus as claimed in claim 7, wherein the plates (15) of the fixed support assembly (14) have convex upper edges (15a).

9. Apparatus as claimed in claim 7 or claim 8, wherein each plate (15) of the fixed support assembly (14) is provided with an upright (15b) extending generally at right-angles thereto and at one end thereof.

10. Apparatus as claimed in claim 9 when appendant to claim 4, further comprising a respective stripping finger (4) associated with the or each stream of labels (24), the or each stripping finger (4) being positioned adjacent to the suction drum (2) so as to strip the labels of the associated stream away from the drum (2).

11. Apparatus as claimed in claim 10, wherein the or each stripping finger (4) is spaced by substantially 150° around the periphery of the suction drum (2) from the point where the associated stream of labels meets the suction drum (2).

12. Apparatus as claimed in claim 10 or claim 11, wherein the arcuate span between the two end suction holes of each series of suction holes in the suction discs (3) is equal to the distance between the point where the labels are stripped away from the suction drum (2) by the associated stripping finger (4) and the uprights (15b) of the fixed support assembly (14).

13. Apparatus as claimed in any one of claims 5 to 12, wherein the common support arm (8) of the movable support assembly (5) is reciprocable in the direction of its longitudinal axis by means of a ram (13).

14. Apparatus as claimed in claim 13, wherein said ram (13) is an air-operated, pressure-intensified oil dosing ram which is extended by air operation and retracted incrementally by doses of oil.

15. Apparatus as claimed in claim 13 or claim 14, wherein the movable support assembly (5) is rotatable about said other end of the support arm (8) by a pneumatic ram assembly (11, 12).

16. Apparatus as claimed in claim 15, wherein the pneumatic ram assembly is constituted by a long-stroke pneumatic ram (11) and a short-stroke pneumatic ram (12).

17. Apparatus as claimed in any one of claims 1 to 16, wherein the intermediate support assembly is constituted by a bar (18) and a respective counting finger (17) aligned with the or each stream of labels, the arrangement being such that the or each counting finger (17) is interposed between the feed means and the associated previously-positioned stack of labels (24) when a predetermined number of labels have been fed to said stack.

18. Apparatus as claimed in claim 17, wherein the or each counting (17) finger is provided with a suction hole in the upper surface for retaining the first label fed thereto after the predetermined number of labels has been fed to the associated stack.

19. Apparatus as claimed in claim 17 or claim 18, further comprising an electronic batch counter for counting the number of labels fed to the or each stack.

20. Apparatus as claimed in any one of claims 17 to 19, wherein the bar (18) is rotatable about its longitudinal axis by a pneumatic ram (19), said pneumatic ram (19) being controlled by a signal from the electronic batch counter.

21. Apparatus as claimed in claim 20, wherein the bar (18) is reciprocable towards, and away from, the feed means (2, 3) by a further pneumatic ram (20).

22. A method of stacking and collecting labels, the method comprising the steps of feeding at least one stream of individual labels to a movable support assembly (5), the feed means (2, 3) being such as to deposit successive labels of the or each stream in a respective stack (24) on the movable support assembly (5), moving the movable support assembly (5) in a first direction relative to a further support assembly (14) so that the or each stack of labels is transferred to the further support assembly (14), characterised by moving the movable support assembly (5) in a second direction relative to the further, fixed support assembly (14) to push the or each stack of labels (24) off the further support assembly (14).

23. A method as claimed in claim 22, wherein the movable support assembly (5) is moved linearly with respect to the fixed support assembly (14) in said first direction, and is moved arcuately with respect to the fixed support assembly in said second direction.

24. A method as claimed in claim 22 or claim 23, further comprising the step of positioning an intermediate support assembly (17, 18, 19) in the path of the labels as they are moved towards the movable support assembly (5) when a predetermined number of labels have been delivered to the or each stack (24), whereby subsequently fed labels of the or each stream form a respective new stack (24) on the intermediate support assembly (17, 18, 19).

25. A method as claimed in claim 24, further comprising the step of withdrawing the intermediate support assembly (17, 18, 19) after the movable support assembly (5) has pushed the or each stack of labels (24) off the fixed support assembly, whereby the or each new stack (24) carried by the intermediate support assembly (17, 18, 19) is transferred to the movable support assembly (5).

**Patentansprüche**

1. Vorrichtung zum Stapeln und Sammeln von Flächenstücken, welche eine Zufuhreinrichtung (1, 2, 3) zum kontinuierlichen Zuführen wenigstens einer Folge von einzelnen Flächenstücken, eine bewegliche Stützanordnung (5) zum Tragen eines zugeordneten Stapels von Flächenstücken (24), der dem oder jeder mit Hilfe der Zufuhreinrichtung (1, 2, 3) zugeführten Folge von Flächenstücken entspricht, und eine weitere Stützanordnung (14) zur Aufnahme des oder jedes Stapels von Flächenstücken (24) von der beweglichen Stützanordnung (5) aufweist, wobei die bewegliche Stützanordnung (5) relativ zu der weiteren Stützanordnung (14) beweglich ist, um zuerst den oder jeden Stapel von Flächenstücken zu der weiteren Stützanordnung (14) zu transportieren und zum zweiten den oder jeden Stapel von Flächenstücken (24) von der zweiten Stützanordnung (14) wegzubewegen, wobei eine Zwischenstützanordnung (17, 18) für das Tragen der Flächenstücke vorgesehen ist, während der oder jeder Stapel von der weiteren Stützanordnung (14) wegbewegt wird, dadurch gekennzeichnet, daß die weitere Stützanordnung (14) fest ist, und daß die bewegliche Stützanordnung (5) den oder jeden Stapel (24) von der festen weiteren Stützanordnung (14) wegdrücken kann.

2. Vorrichtung nach Anspruch 1, die ferner einen Übergabeschlitten (16) aufweist, der in der Nähe der festen Stützanordnung (14) an einer solchen Stelle angeordnet ist, daß er den oder jeden Stapel von Flächenstücken (24) aufnimmt, wenn dieser von der Festen Stützanordnung (14) mit Hilfe der beweglichen Stützanordnung (5) weggedrückt wird.

3. Vorrichtung nach Anspruch 1 oder Anspruch 2, bei der die Zufuhreinrichtung von einer Saugtrommel (2) gebildet wird.

4. Vorrichtung nach Anspruch 3, bei der die Saugtrommel (2) einen zugeordneten Satz von Saugscheiben (3) für jede Folge von Flächenstükken enthält, wobei jede Saugscheibe (3) mit wenigstens einer Reihe von Saugöffnungen an ihrem Umfang versehen ist.

5. Vorrichtung nach einem der Ansprüche 1 bis 4, bei der die bewegliche Stützanordnung (5) von einer Mehrzahl von parallelen, in gleichen Abständen angeordneten Platten (6) gebildet wird, die Platten (6) an einem Ende eines gemeinsamen Stützarmes (8) angebracht ist und das andere Ende des Stützarms (8) schwenkbeweglich im Gehäuse (10) der Vorrichtung gelagert ist.

6. Vorrichtung nach Anspruch 5, bei der die Platten (6) der beweglichen Stützanordnung (6) konvexe obere Ränder (6a) haben.

7. Vorrichtung nach Anspruch 5 oder Anspruch 6, bei der die feste Stützanordnung (14) von einer Mehrzahl von parallelen, in gleichen Abständen angeordneten Platten (15) gebildet wird, und die Platten (15) der festen Stützanordnung (14) derart angeordnet sind, daß die Platten (6) der beweglichen Stützanordnung (5) dazwischen durchgehen können.

8. Vorrichtung nach Anspruch 7, bei der die Platten (15) der festen Stützanordnung (14) konvexe obere Ränder (15a) haben.

9. Vorrichtung nach Anspruch 7 oder Anspruch 8, bei der jede Platte (15) der festen Stützanordnung (14) mit einer Stütze (15b) versehen ist, die im allgemeinen etwa rechtwinklig hierzu und an einem Ende derselben verläuft.

10. Vorrichtung nach Anspruch 9 in Abhängigkeit von Anspruch 4, die ferner einen zugeordneten Abstreiffinger (4) aufweist, der dem oder jeder Folge von Flächenstücken (24) zugeordnet ist, und der oder jeder Abstreiffinger (4) in der Nähe der Saugtrommel (2) derart angeordnet ist, daß die Flächenstücke der zugeordneten Folge von der Trommel (2) abgestreift werden.

11. Vorrichtung nach Anspruch 10, bei der der oder jeder Abstreiffinger (4) in einem Abstand im wesentlichen von 150° in Umfangsrichtung der Saugtrommel (2), ausgehend von der Stelle angeordnet ist, an der die zugeordnete Folge von Flächenstücken auf die Saugtrommel (2) trifft.

12. Vorrichtung nach Anspruch 10 oder Anspruch 11, bei der die bogenförmige Stützweite zwischen den beiden enseitigen Saugöffnungen jeder Reihe von Saugöffnungen in den Saugscheiben (3) gleich dem Abstand zwischen der Stelle, an der die Flächenstücke von der Saugtrommel (2) durch den zugeordneten Abstreiffinger (4) abgestreift werden, und den Stützen (15b) der festen Stützanordnung (4) ist.

13. Vorrichtung nach einem der Ansprüche 5 bis 12, bei der der gemeinsame Stützarm (8) der beweglichen Stützanordnung (5) in Richtung der Längsachse mit Hilfe einer Kolbeneinrichtung (13) hin- und hergehend beweglich ist.

14. Vorrichtung nach Anspruch 13, bei der die Kolbeneinrichtung (13) eine mit Luft betriebene, druckverstärkte Öldosier-Kolbeneinrichtung ist, die durch Luftbeaufschlagung ausgefahren und durch die Öldosierung inkrementell eingefahren wird.

15. Vorrichtung nach Anspruch 13 oder Anspruch 14, bei der die bewegliche Stützanordnung (5) um das andere Ende des Stützarmes (8) mit Hilfe einer pneumatischen Kolbenanordnung (11, 12) drehbar ist.

16. Vorrichtung nach Anspruch 15, bei der die pneumatische Kolbenanordnung von einer langhubigen pneumatischen Kolbeneinrichtung (11) und einer kurzhubigen pneumatischen Kolbeneinrichtung (12) gebildet wird.

17. Vorrichtung nach einem der Ansprüche 1 bis 16, bei der die Zwischenstützanordnung von einem Glied (18) und einem zugeordneten Zählfinger (17) gebildet wird, der zu der oder jeder Folge von Flächenstücken ausgerichtet ist, wobei die Anordnung derart getroffen ist, daß der oder jeder Zählfinger (17) zwischen der Zufuhreinrichtung und dem zugeordneten, zuvor positionierten Stapel von Flächenstücken (24) angeordnet ist, wenn eine vorbestimmte Anzahl von Flächenstücken dem Stapel zugeführt wurde.

18. Vorrichtung nach Anspruch 17, bei der der oder jeder Zählfinger (17) mit einer Saugöffnung in der oberen Fläche versehen ist, um das erste, zugeführte Flächenstück festzuhalten, nachdem die vorbestimmte Anzahl von Flächenstücken dem zugeordneten Stapel zugeführt wurde.

19. Vorrichtung nach Anspruch 17 oder Anspruch 18, die ferner eine elektronische Mengenzähleinrichtung zum Zählen der Anzahl der dem oder jedem Stapel zugeführten Flächenstücke aufweist.

20. Vorrichtung nach einem der Ansprüche 17 bis 19, bei der das Glied (18) um seine Längsachse durch eine pneumatische Kolbeneinrichtung (19) drehbar ist, wobei die pneumatische Kolbeneinrichtung (19) durch ein Signal von der elektronischen Mengenzähleinrichtung gesteuert wird.

21. Vorrichtung nach Anspruch 20, bei der das Glied (18) mit Hilfe einer weiteren pneumatischen Kolbeneinrichtung (20) in Richtung auf die Zufuhreinrichtung (2, 3) zu und von dieser weg hin- und hergehend beweglich ist.

22. Verfahren zum Stapeln und Sammeln von Flächenstücken, welches die Schritte aufweist, gemäß denen wenigstens eine Folge von einzelnen Flächenstücken einer beweglichen Stützanordnung (5) zugeführt wird, die Zufuhreinrichtung (2, 3) derart ausgelegt ist, daß aufeinanderfolgende Flächenstücke der oder jeder Folge in einem zugeordneten Stapel (24) auf der beweglichen Stützanordnung (5) abgelegt werden, die bewegliche Stützanordnung (5) in einer ersten Richtung relativ zu einer weiteren Stützanordnung (14) derart bewegt wird, daß der oder jeder Stapel von Flächenstücken zu der weiteren Stützanordnung (14) transportiert wird, dadurch gekennzeichnet, daß die bewegliche Stützanordnung (5) in eine zweite Richtung relativ zu der weiteren, festen Stützanordnung (4) bewegt wird, um den oder jeden Stapl von Flächenstücken (24) von der weiteren Stützanordnung (14) wegzudrücken.

23. Verfahren nach Anspruch 22, bei dem die bewegliche Stützanordnung (5) linear bezüglich der festen Stützanordnung (14) in der ersten Richtung und bezüglich der festen Stützanordnung in der zweiten Richtung bogenförmig bewegt wird.

24. Verfahren nach Anspruch 22 oder Anspruch 23, das ferner den Schritt aufweist, gemäß dem eine Zwischenstützanordnung (17, 18, 19) im Bewegungsweg der Flächenstücke positioniert wird, wenn sich diese in Richtung zu der beweglichen Stützanordnung (5) bewegen, wenn eine vorbestimmte Anzahl von Flächenstücken zu dem oder jedem Stapel (24) abgegeben wurde, wobei anschließend zugeführte Flächenstücke des oder jeder Folge von Flächenstücken einen entsprechenden neuen Stapel (24) auf der Zwischenstützanordnung (17, 18, 19) bilden.

25. Verfahren nach Anspruch 24, das ferner den Schritt aufweist, gemäß dem die Zwischenstützanordnung (17, 18, 19) abgezogen wird, nachdem die bewegliche Stützanordnung (5) den oder jeden Stapel von Flächenstücken (24) von der festen Stützanordnung weggedrückt hat, wobei der oder jeder neue Stapel (24), der von der Zwischenstützanordnung (17, 18, 19) getragen wird zu der beweglichen Stützanordnung (5) transportiert wird.

**Revendications**

1. Appareil pour empiler et assembler des étiquettes, comprenant un dispositif d'alimentation (1, 2, 3) pour distribuer en continu au moins un courant d'étiquettes individuelles, en ensemble mobile de support (5) pour soutenir une pile d'étiquettes (24) correspondant à ce courant qui lui est amené par le dispositif d'alimentation (1, 2, 3), ou à chacun de ces courants, et un autre ensemble de support (14) pour recevoir la pile d'étiquettes (24), ou chacune de ces piles, provenant de l'ensemble mobile de support (5), cet ensemble mobile (5) pouvant être déplacé par rapport à l'autre ensemble de support (14) tout d'abord pour transférer la pile, ou chaque pile, d'étiquettes à l'autre ensemble de support (14), et en second lieu pour entraîner la pile, ou chaque pile, d'étiquettes (24) hors de l'autre ensemble de support (14), dans lequel un ensemble de support intermédiaire (17, 18) est prévu pour soutenir des étiquettes pendant que la pile, ou chaque pile, est entraînée hors de l'autre ensemble de support (14), caractérisé en ce que ledit autre ensemble de support (14) est fixe et en ce que l'ensemble mobile de support (5) est apte à pousser la pile, ou chaque pile, (24) hors dudit autre ensemble de support fixe (14).

2. Appareil suivant la revendication 1, comprenant en outre un chariot (16) de transfert disposé adjacent à l'ensemble de support fixe (14) dans une position appropriée pour recevoir la pile, ou chaque pile, d'étiquettes (24) lorsqu'elle est poussée hors du premier ensemble de support fixe (14) par l'ensemble mobile de support (5).

3. Appareil suivant la revendication 1 ou 2, dans lequel le dispositif d'alimentation est constitué par un tambour d'aspiration (2).

4. Appareil suivant la revendication 3, dans lequel le tambour d'aspiration (2) comprend une série de disques d'aspiration (3) pour chaque courant d'étiquettes, chaque disque (3) présentant au moins une série de trous d'aspiration dans sa périphérie.

5. Appareil suivant l'une quelconque des revendications 1 à 4, dans lequel l'ensemble mobile de support (5) est constitué par plusieurs plaques parallèles (6) également espacées, ces plaques (6) étant montées à une extrémité d'un bras commun (8) de support dont l'autre extrémité est articulée dans le carter (10) de l'appareil.

6. Appareil suivant la revendication 5, dans lequel les plaques (6) de l'ensemble mobile de support (5) ont des bords supérieurs convexes (6a).

7. Appareil suivant la revendication 5 ou 6, dans lequel l'ensemble de support fixe (14) est constitué par plusieurs plaques parallèles (15) également espacées, placées de telle façon que les plaques (6) de l'ensemble mobile de support (5) peuvent passer entre-elles.

8. Appareil suivant la revendication 7, dans lequel les plaques (15) de l'ensemble de support fixe (14) ont un bord supérieur convexe (15a).

9. Appareil suivant la revendication 7 ou 8, dans lequel chaque plaque (15) de l'ensemble de support fixe (14) comporte un montant (15b) s'étendant dans son ensemble à angle droit par rapport à celle-ci et à l'une de ses extrémités.

10. Appareil suivant la revendication 9 lorsqu'elle est dépendante de la revendication 4, comprenant en outre un doigt d'enlèvement (4) associé au courant d'étiquettes (24), ou à chacun de ceux-ci, le ou chaque doigt d'enlèvement (4) étant positionné au voisinage du tambour d'aspiration (2) de manière à enlever du tambour (2) les étiquettes du courant associé.

11. Appareil suivant la revendication 10, dans lequel le ou chaque doigt d'enlèvement (4) est espacé d'environ 150°, le long de la périphérie du tambour d'aspiration (2), du point où le courant associé d'étiquettes rencontre le tambour (2).

12. Appareil suivant la revendication 10 ou 11, dans lequel la longueur de l'arc de cercle entre les deux troux d'aspiration d'extrémité de chaque série de trous d'aspiration dans les disques d'aspiration (3) est égale à la distance entre le point auquel les étiquettes sont retirées du tambour (2) par les doigts d'enlèvement associés (4) et les montants (15b) de l'ensemble de support fixe (14).

13. Appareil suivant l'une quelconque des revendications 5 à 12, dans lequel le bras commun de support (8) de l'ensemble de support mobile (5) est adapté pour effectuer un mouvement de va-et-vient dans la direction de son axe longitudinal sous l'action d'un vérin (13).

14. Appareil suivant la revendication 13, dans lequel ledit vérin (13) est un vérin doseur à multiplicateur de pression d'huile et à commande pneumatique qui est mis en extension par voie pneumatique et rétracté par incréments par des doses d'huile.

15. Appareil suivant la revendication 13 ou 14, dans lequel l'ensemble mobile de support (5) est entraîné en rotation autour de ladite autre extrémité du bras de support (8) par un ensemble (11, 12) à vérins pneumatiques.

16. Appareil suivant la revendication 15, dans lequel l'ensemble à vérins pneumatiques est constitué par un vérin pneumatique (11) à course longue et par un vérin pneumatique (12) à course courte.

17. Appareil suivant l'une quelconque des revendications 1 à 16, dans lequel l'ensemble intermédiaire de support est constitué par une barre (18) et un doigt de comptage (17) aligné avec le courant d'étiquettes ou avec chacun de ceux-ci, l'agencement étant tel que le doigt de comptage (17), ou chaque doigt de comptage, est interposé entre le dispositif d'alimentation et la pile d'étiquettes associée (24) positionnée antérieurement lorsqu'un nombre prédéterminé d'étiquettes a été amené à ladite pile.

18. Appareil suivant la revendication 17, dans lequel le doigt de comptage (17), ou chacun d'eux, comporte un trou d'aspiration dans la surface supérieure pour retenir la première étiquette qui lui est distribuée après que le nombre prédéterminé d'étiquettes a été amené à la pile associée.

19. Appareil suivant la revendication 17 ou 18, comprenant en outre un compteur électronique de lots pour compter le nombre d'étiquettes distribué à la pile ou à chaque pile.

20. Appareil suivant l'une quelconque des revendications 17 à 19, dans lequel la barre (18) peut être entraîinée en rotation autour de son axe longitudinal au moyen d'un vérin pneumatique (19), ce vérin (19) étant commandé par un signal provenant du compteur électronique de lots.

21. Appareil suivant la revendication 20, dans lequel la barre (18) peut effectuer un mouvement de va-et-vient en se rapprochant et en s'éloignant du dispositif d'alimentation (2, 3), grâce à un autre vérin pneumatique (20).

22. Procédé pour empiler et assembler des étiquettes, comprenant les phases consistant: à distribuer au moins un courant d'étiquettes individuelles à un ensemble mobile de support (5), le dispositif d'alimentation (2, 3) étant apte à déposer des étiquettes successives du courant, ou de chaque courant, dans une pile correspondante (24) sur l'ensemble de support mobile (5), à déplacer cet ensemble (5) dans une première direction par rapport à un autre ensemble de support (14) de manière que la pile d'étiquettes, ou chaque pile, soit transférée sur ledit autre ensemble de support (14), caractérisé en ce qu'on déplace l'ensemble mobile de support (5) dans une seconde direction par rapport à l'autre ensemble de support (14) fixe pour pousser la ou chaque pile d'étiquettes (24) hors de l'autre ensemble de support (14).

23. Procédé suivant la revendication 22, dans lequel on déplace l'ensemble de support mobile (5) linéairement par rapport à l'ensemble de support fixe (14) dans ladite première direction, et on le déplace suivant une courbe par rapport à l'ensemble de support fixe dans ladite seconde direction.

24. Procédé suivant la revendication 22 ou 23, comprenant outre la phase consistant à positionner un ensemble intermédiaire de support (17, 18, 19) dans le trajet des étiquettes lorsqu'elles sont déplacées vers l'ensemble de support mobile (5) lorsqu'un nombre prédéterminé d'étiquettes a été fourni à la pile ou à chaque pile (24), grâce à quoi des étiquettes du ou de chaque courant distribuées ensuite forment une nouvelle pile respective (24) sur l'ensemble intermédiaire de support (17, 18, 19).

25. Procédé suivant la revendication 24, comprenant en outre la phase consistant à retirer l'ensemble intermédiaire de support (17, 18, 19) après que l'ensemble mobile de support (5) a poussé la pile ou chaque pile d'étiquettes (24) hors de l'ensemble de support fixe, grâce à quoi la ou chaque nouvelle pile (24) transportée par l'ensemble intermédiaire de support (17, 18, 19) est transférée à l'ensemble mobile de support (5).

Fig.1

EP 0 178 749 B1

Fig.2

Fig.3a

Fig.3b

Fig.3c

Fig.3d

4

Fig.3e

Fig.3f

5

Fig.3g